# EUROPÄISCHE PATENTSCHRIFT

(11) **EP 0 548 523 B1**
(45) Veröffentlichungstag und Bekanntmachung des Hinweises auf die Patenterteilung: **05.07.1995**
(21) Anmeldenummer: 92119179.7
(22) Anmeldetag: 10.11.1992
(51) Int. Cl.: B01D 46/52

(54) **Ringfilterelement aus einem zick-zack-förmig gefalteten Filtermaterial**
Annular filter obtained from pleated filter material
Anneau filtrant obtenu à partir d'une matière filtrante plissée

(30) Priorität: 19.12.1991 DE 4141969
(43) Veröffentlichungstag der Anmeldung: 30.06.1993
(73) Patentinhaber: KNECHT FILTERWERKE GMBH, D-70376 Stuttgart (DE)
(72) Erfinder: Widmann, Sigbert, W-7322 Donzdorf (DE)
(74) Vertreter: Pfusch, Volker, Dipl.-Ing.

(56) Entgegenhaltungen:
- EP-A- 0 447 875
- FR-A- 2 214 505
- US-A- 4 303 426
- US-A- 4 636 231

## Beschreibung

Die Erfindung betrifft ein Ringfilterelement aus einem zick-zack-förmig gefalteten Filterbahnmaterial nach dem Oberbegriff des Patentanspruchs.

Ein solches Ringfilterelement ist aus FR-A-2214505 bekannt.

Bei diesem bekannten Filterelement sind die Endscheiben aufgeklebt. Bei einem solchen Verkleben läßt sich die Verbindung zwischen der jeweiligen Endscheibe und dem Filterbahnmaterial nicht ausschließlich auf den Kontaktbereich zwischen Stirnkante des Filterbahnmaterials und angrenzender Endscheibe lokal begrenzen. Damit geht unter anderem Filterfläche in unerwünschter Weise verloren.

Hier eine Verbesserung zu schaffen ist das Problem, mit dem sich die vorliegende Erfindung beschäftigt. Gelöst wird dieses Problem durch eine Ausgestaltung des gattungsgemäßen Ringfilterelementes nach den kennzeichnenden Merkmalen des Patentanspruchs.

Die erfindungsgemäße Ultraschallverschweißung erlaubt eine auf die Stirnflächen des zick-zack-förmig gefalteten Filtermaterials begrenzte dichte Verbindung an einem die Endscheibe bildenden dünnen thermoplastischen Vliesmaterial. Damit ist es erstmals möglich, ein Ringfilterelement aus nichtaufschmelzbarem Papier mit einer dünnen Vlies-Endscheibe zu verbinden, die bis auf die eng begrenzten Kontaktflächen mit den Stirnkanten des Filterbahnmaterials voll als Filtermaterial mit zur Verfügung steht.

Die erfindungsgemäße Lösung ist insbesondere nicht mit einem aus US 4,636,231 bekannten Verfahren zum Verbinden von Filtermaterialien vergleichbar. Denn jenes Verfahren besteht aus einem Verbinden der Filtermaterialien durch Heißpressen, wodurch keine lokal begrenzten Kontaktstellen erreichbar sind. Die Verbindung muß dort vielmehr jeweils vollflächig erfolgen.

## Patentansprüche

1. Ringfilterelement aus einem zick-zack-förmig gefalteten nichtaufschmelzbaren Filterbahnmaterial mit die Längskanten des Filterbahnmaterials jeweils dicht abdeckenden Endscheiben aus platten- oder folienförmigem Filtermaterial,
**dadurch gekennzeichnet**,
daß die Endscheiben aus thermoplastischem Vliesmaterial bestehen und mit den Stirnkanten des zick-zack-förmig gefalteten Filterbahnmaterials ultraschallverschweißt sind.

## Claims

1. Annular filter made o a pleated non-meltable filter web material with end discs made of sheet or film-shaped filter material tightly covering the longitudinal edges of the filter web material
characterised in that
the end discs consist of thermoplastic fleece material and are welded by ultrasound to the end edges of the pleated filter web material.

## Revendications

1. Elément filtrant annulaire en matière filtrante en bande non fusible plissée comportant des disques d'extrémité en matière filtrante sous forme de plaque ou de feuille qui couvrent de façon étanche les bords longitudinaux de la matière filtrante en bande, caractérisé par le fait que les disques d'extrémité sont en matière en voile thermoplastique et soudés par ultrasons aux bords frontaux de la matière filtrante en bande plissée.
